# EUROPEAN PATENT APPLICATION

(11) **EP 4 191 781 A1**
(43) Date of publication of application: **07.06.2023**
(21) Application number: 21954414.5
(22) Date of filing: 30.09.2021
(51) Int. Cl.: H01M 50/514

(54) **BATTERY CELL, BATTERY, ELECTRICAL DEVICE, AND FABRICATION METHOD AND APPARATUS FOR BATTERY CELL**

(71) Applicant: Contemporary Amperex Technology Co., Limited, Ningde, Fujian 352100 (CN)
(72) Inventor: XIAO, Haihe, Ningde Fujian 352100 (CN); ZHANG, Xiaowen, Ningde Fujian 352100 (CN); LIU, Qiang, Ningde Fujian 352100 (CN); ZHOU, Xigen, Ningde Fujian 352100 (CN); LIN, Mingxiang, Ningde Fujian 352100 (CN); ZHONG, Wei, Ningde Fujian 352100 (CN)
(74) Representative: Feira, Edoardo
(86) International application number: PCT/CN2021/122028
(87) International publication number: WO 2023/050251

(57) **Abstract**

Some embodiments of this application provide a battery cell, a battery, an electrical device, and a method and an apparatus for manufacturing a battery cell. The battery cell includes a housing, a first electrode assembly, and a second electrode assembly. The first electrode assembly is disposed in the housing. The first electrode assembly includes a first body portion, and a first positive tab and a first negative tab that extend from the first body portion. The second electrode assembly is disposed in the housing. The second electrode assembly includes a second body portion, and a second positive tab and a second negative tab that extend from the second body portion. The first body portion and the second body portion are spaced out along a first direction. The first positive tab and the first negative tab are disposed at an end of the first body portion, where the end is closer to the second body portion along the first direction. The second positive tab and the second negative tab are disposed at an end of the second body portion, where the end is closer to the first body portion along the first direction.

## Description

### TECHNICAL FIELD

This application relates to the technical field of batteries, and in particular, to a battery cell, a battery, an electrical device, and a method and apparatus for manufacturing a battery cell.

### BACKGROUND

Energy conservation and emission reduction are key to sustainable development of the automobile industry, and electric vehicles have become an important part of the sustainable development of the automobile industry by virtue of energy saving and environmental friendliness. Battery technology is crucial to development of electric vehicles.

During charge-and-discharge cycles, an electrode core in a battery in use generates heat, thereby impairing the lifespan of the battery.

### SUMMARY

This application provides a battery cell, a battery, an electrical device, and a method and apparatus for manufacturing a battery cell to reserve a space for arranging a cooling apparatus and effectively reduce a temperature of the battery cell.

According to a first aspect, this application provides a battery cell, including:
a housing;
a first electrode assembly, disposed in the housing, where the first electrode assembly includes a first body portion, and a first positive tab and a first negative tab that extend from the first body portion; and
a second electrode assembly, disposed in the housing, where the second electrode assembly includes a second body portion, and a second positive tab and a second negative tab that extend from the second body portion.

The first body portion and the second body portion are spaced out along a first direction. The first positive tab and the first negative tab are disposed at an end of the first body portion, where the end is closer to the second body portion along the first direction. The second positive tab and the second negative tab are disposed at an end of the second body portion, where the end is closer to the first body portion along the first direction.

In some of the above embodiments, the first body portion and the second body portion are spaced out along the first direction, and the first positive tab, the first negative tab, the second positive tab, and the second negative tab are all disposed between the first body portion and the second body portion. In this way, a space is reserved for arranging a liquid cooling system between the housing and the end that is of the first body portion and that is away from the second body portion, and/or between the housing and the end that is of the second body portion and that is away from the first body portion. In contrast to a technical solution in which the first positive tab, the first negative tab, the second positive tab, and the second negative tab are all disposed in the space between the electrode core and the top of the housing, this technical solution of this application significantly increases the space for arranging the liquid cooling system, effectively enhances the cooling effect, and prevents overtemperature of the battery cell, thereby preventing evaporation and gradual drying-up of the electrolytic solution, avoiding problems such as decline of the charging efficiency, deformation of the electrode plate, increase of the internal resistance, accelerated oxidation of mechanical parts, and burn-out of electrode plates or separator, and effectively increasing the lifespan of the battery.

In some embodiments, the battery cell further includes a first adapter piece, a second adapter piece, a positive post, and a negative post. The first positive tab and the second positive tab are both connected to the first adapter piece. The first adapter piece is connected to the positive post. The first negative tab and the second negative tab are both connected to the second adapter piece. The second adapter piece is connected to the negative post.

In some of the above embodiments, the first positive tab and the second positive tab are both connected to the first adapter piece. The first negative tab and the second negative tab are both connected to the second adapter piece. Therefore, the first electrode assembly and the second electrode assembly share an adapter piece, thereby reducing the number of components of the battery cell and saving cost. In addition, the sharing of the adapter piece also simplifies the internal structural layout of the battery cell, saves space, and reduces the size of the battery cell.

In some embodiments, the positive post is mounted on a first end face of the housing, and the negative post is mounted on a second end face of the housing. The first end face is disposed opposite to the second end face, and both the first end face and the second end face are parallel to the first direction.

In this embodiment, the positive post and the negative post are disposed on the two ends perpendicular to the first direction of the housing respectively. In this way, the first positive tab and the second positive tab that are located between the first body portion and the second body portion can be conveniently connected to the positive post by extending transversely, and the first negative tab and the second negative tab that are located between the first body portion and the second body portion can be conveniently connected to the negative post by extending transversely, thereby shortening the first adapter piece and the second adapter piece. Circuit loss and heat emission can be reduced by shortening the first adapter piece and the second adapter piece.

In some embodiments, the battery cell further includes a first end cap and a second end cap. A first opening is made on the first end face of the housing, and a second opening is made on the second end face of the housing. The first end cap is configured to seal the first opening, and the second end cap is configured to seal the second opening. With the two end caps disposed, the electrode assembly may be put into the housing along the direction perpendicular to the first direction first, and then the two openings are closed by the two end caps respectively, thereby improving the convenience of assembling.

In some embodiments, the battery cell further includes a first sleeve. The positive post includes a first inner post and a first outer post. The first sleeve is mounted on the first end cap. The first outer post is disposed on an outer side of the first end cap and connected to the first sleeve. The first adapter piece is connected to a first end of the first inner post. A second end of the first inner post passes through the first sleeve and is connected to the first sleeve on an outer side of the housing. This structure improves the convenience of assembling the battery cell, helps to fix and connect the first inner post and the first sleeve outside the housing, and improves the convenience of operation.

In some embodiments, the battery cell further includes a second sleeve. The negative post includes a second inner post and a second outer post. The second sleeve is mounted on the second end cap. The second outer post is disposed on an outer side of the second end cap and connected to the second sleeve. The second adapter piece is connected to a second end of the second inner post. The second end of the second inner post passes through the second sleeve and is connected to the second sleeve on an outer side of the housing. This structure improves the convenience of assembling the battery cell, helps to fix and connect the second inner post and the second sleeve outside the housing, and improves the convenience of operation.

In some embodiments, the first adapter piece includes a first connecting portion extending in a direction perpendicular to the first direction, the first connecting portion is connected to the first positive tab and the second positive tab, and an end that is of the first connecting portion and that is closer to the positive post is connected to the positive post. Alternatively, the first adapter piece includes a first connecting portion extending in a direction perpendicular to the first direction and a second connecting portion extending in a direction parallel to the first direction, the first connecting portion and the second connecting portion are connected to form an L shape, the first connecting portion is connected to the first positive tab and the second positive tab, and the second connecting portion is connected to the positive post. This structure helps to enhance stability of electrical connection between the first adapter piece and the positive post by increasing the contact area between the first adapter piece and the positive post.

In some embodiments, the second adapter piece includes a third connecting portion extending in a direction perpendicular to the first direction, the third connecting portion is connected to the first negative tab and the second negative tab, and an end that is of the third connecting portion and that is closer to the negative post is connected to the negative post. Alternatively, the second adapter piece includes a third connecting portion extending in a direction perpendicular to the first direction and a fourth connecting portion extending in a direction parallel to the first direction, the third connecting portion and the fourth connecting portion are connected to form an L shape, the third connecting portion is connected to the first negative tab and the second negative tab, and the fourth connecting portion is connected to the negative post. This structure helps to enhance stability of electrical connection between the second adapter piece and the negative post by increasing the contact area between the second adapter piece and the negative post.

In some embodiments, the battery cell further includes a first insulation piece disposed in the housing, and the first insulation piece is configured to electrically isolate the positive post from the housing; and/or the battery cell further includes a second insulation piece disposed in the housing, and the second insulation piece is configured to electrically isolate the negative post from the housing. The first insulation piece and the second insulation piece reduce the risk of a short circuit between the positive electrode and the negative electrode, and improve the safety of the battery cell in use.

In some embodiments, the battery cell further includes a support plate. The support plate is disposed between the housing and an end that is of the second body portion and that is away from the first body portion.

The support plate improves the stability of the electrode assembly, helps to prevent the first body portion and the second body portion from being squeezed, effectively protects the electrode assembly, and avoids affecting the current output of the electrode assembly.

In some embodiments, the support plate is insulated from the housing, and the end that is of the first body portion and that is away from the second body portion is insulated from the housing. In this way, both the first body portion and the second body portion keep insulated from the housing, so as to prevent the housing from being electrified and avoid accidents such as electric shock.

In some embodiments, the battery cell further includes a bracket. The bracket serves as a support between the first electrode assembly and the second electrode assembly.

In the foregoing embodiment, the disposed bracket serves to support the first body portion and the second body portion, and keep unchanged relative positions of the first body portion and the second body portion against the housing 1, thereby preventing the movement of the first body portion and the second body portion from pulling other electrically connected components, where the pulling affects the stability and reliability of the electrically connected components. This also helps to protect the liquid cooling system disposed between the first body portion and the housing, and effectively ensure a desired cooling effect.

In some embodiments, the bracket includes a first support portion, a second support portion, and a third support portion connected between the first support portion and the second support portion. The first support portion is configured to serve as a support between the first body portion and a first positive tab and a support between the first body portion and a first negative tab. The second support portion is configured to serve as a support between the second body portion and a second positive tab and a support between the second body portion and a second negative tab. The advantages of the bracket with such a structure are: when the battery cell is in a working state, no matter whether the first electrode assembly or the second electrode assembly is located above, the first electrode assembly and the second electrode assembly can be supported effectively, thereby facilitating installation and operation.

In some embodiments, the first body portion is formed by winding together a first positive electrode plate, a first negative electrode plate, and a separator located between the first positive electrode plate and the first negative electrode plate, and the first direction is parallel to a winding centerline of the first body portion; and/or, the second body portion is formed by winding together a second positive electrode plate, a second negative electrode plate, and a separator located between the second positive electrode plate and the second negative electrode plate, and the first direction is parallel to a winding centerline of the second body portion.

According to a second aspect, this application provides a battery, including the battery cell.

According to a third aspect, this application provides an electrical device, including the battery. The battery is configured to supply electrical energy to the electrical device.

According to a fourth aspect, this application provides a method for manufacturing a battery cell, including:
providing a housing, a first electrode assembly, and a second electrode assembly, where the first electrode assembly includes a first body portion, and a first positive tab and a first negative tab that extend from the first body portion, and the second electrode assembly includes a second body portion, and a second positive tab and a second negative tab that extend from the second body portion;
disposing both the first electrode assembly and the second electrode assembly in the housing; and
spacing out the first body portion and the second body portion along a first direction, and disposing the first positive tab and the first negative tab at an end of the first body portion, where the end is closer to the second body portion along the first direction; and disposing the second positive tab and the second negative tab at an end of the second body portion, where the end is closer to the first body portion along the first direction.

According to a fifth aspect, this application provides an apparatus for manufacturing a battery cell, including:
a providing apparatus, configured to provide a housing, a first electrode assembly, and a second electrode assembly, where the first electrode assembly includes a first body portion, and a first positive tab and a first negative tab that extend from the first body portion, and the second electrode assembly includes a second body portion, and a second positive tab and a second negative tab that extend from the second body portion; and
a placement apparatus, configured to dispose both the first electrode assembly and the second electrode assembly in the housing, space out the first body portion and the second body portion along a first direction, and dispose the first positive tab and the first negative tab at an end of the first body portion, where the end is closer to the second body portion along the first direction; and dispose the second positive tab and the second negative tab at an end of the second body portion, where the end is closer to the first body portion along the first direction.

The battery and the electrical device according to this application each include the battery cell according to embodiments of this application. Therefore, both the battery and the electrical device possess the advantages of reserving space for arranging the liquid cooling system, increasing the space for arranging the liquid cooling system, enhancing the cooling effect, and in turn, improving safety performance and lifespan of the battery. The method for manufacturing a battery cell and the apparatus for manufacturing a battery cell according to this application also possess the foregoing advantages, details of which are omitted here.

The foregoing description is merely an overview of the technical solutions of this application. The following expounds specific embodiments of this application to enable a clearer understanding of the technical means of this application, enable implementation thereof based on the content of the specification, and make the foregoing and other objectives, features, and advantages of this application more evident and comprehensible.

### BRIEF DESCRIPTION OF DRAWINGS

To describe the technical solutions in the embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.
FIG. 1 is a schematic structural diagram of an electrical device according to some embodiments of this application;
FIG. 2 is a schematic structural diagram of a battery according to some embodiments of this application;
FIG. 3 is a three-dimensional diagram of a battery cell according to some embodiments of this application;
FIG. 4 is a front view of a battery cell according to some embodiments of this application;
FIG. 5 is a top view of a battery cell according to some embodiments of this application;
FIG. 6 is a left view of a battery cell according to some embodiments of this application;
FIG. 7 is a sectional view of sectioning along a line A-A shown in FIG. 4 according to some embodiments of this application;
FIG. 8 is a close-up view of a part P1 shown in FIG. 7 according to some embodiments of this application;
FIG. 9 is a close-up view of a part P2 shown in FIG. 7 according to some embodiments of this application;
FIG. 10 is a close-up view of a part P3 shown in FIG. 7 according to some embodiments of this application;
FIG. 11 is a sectional view of sectioning along a line B-B shown in FIG. 4 according to some embodiments of this application;
FIG. 12 is a sectional view of sectioning along a line A-A shown in FIG. 5 according to some embodiments of this application;
FIG. 13 is a close-up view of a part P4 shown in FIG. 12 according to some embodiments of this application;
FIG. 14 is a schematic structural diagram of connection between a negative post and a second adapter piece according to some embodiments of this application;
FIG. 15 is a sectional view of sectioning along a line A-A shown in FIG. 5 according to other embodiments of this application;
FIG. 16 is a close-up view of a part P5 shown in FIG. 15 according to some embodiments of this application; and
FIG. 17 is a schematic structural diagram of connection between a negative post and a second adapter piece according to other embodiments of this application.
FIG. 18 is a front view of a bracket in a battery cell according to some embodiments of this application;
FIG. 19 is a top view of a bracket in a battery cell according to some embodiments of this application; and
FIG. 20 is a left view of a bracket in a battery cell according to some embodiments of this application.

The drawings are not drawn to scale.

### Reference numerals:

1000. vehicle; 100. battery; 200. controller; 300. motor; 101. first cover body; 102. second cover body; 10a. shell; 20. battery cell; 1. housing; 11. support plate; 1a. first end cap; 1b. second end cap; 2. first electrode assembly; 21. first body portion; 22. first positive tab; 23. first negative tab; 3. second electrode assembly; 31. second body portion; 32. second positive tab; 33. second negative tab; 4. bracket; 41. first support portion; 42. second support portion; 43. third support portion; 5. first adapter piece; 51. first connecting portion; 52. second connecting portion; 6. second adapter piece; 61. third connecting portion; 62. fourth connecting portion; 7a. first sleeve; 7. positive post; 71. first inner post; 72. first outer post; 8a. second sleeve; 8. negative post; 81. second inner post; 82. second outer post; 9. first insulation piece; 10. second insulation piece.

### DETAILED DESCRIPTION OF EMBODIMENTS

Embodiments of the technical solutions of this application are described in detail below with reference to the drawings. The following embodiments are merely intended to describe the technical solutions of this application more clearly, and serve merely as examples but without hereby limiting the protection scope of this application.

Unless otherwise defined, all technical and scientific terms used herein have the same meanings as commonly understood by a person skilled in the technical field of this application. The terms used herein are merely intended to describe specific embodiments but not intended to limit this application. The terms "include" and "contain" and any variations thereof used in the specification, claims, and brief description of drawings of this application are intended as non-exclusive inclusion.

In the description of the embodiments of this application, the technical terms "first" and "second" are merely intended to distinguish different objects but not intended to indicate or imply relative importance or implicitly specify the number of the indicated technical features, the specific order, or order of priority. In addition, the term "perpendicular" does not means exact perpendicularity, but means perpendicularity falling within an error tolerance range. "Parallel" does not mean exact parallelism, but means parallelism falling within an error tolerance range.

Reference to "embodiment" herein means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of the embodiments of this application, unless otherwise expressly specified, the term "a plurality of" means two or more. Similarly, unless otherwise expressly defined, "a plurality of groups" means two or more groups, and "a plurality of pieces" means two or more pieces.

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of the embodiments of this application, unless otherwise expressly specified and defined, the technical terms such as "mounting", "concatenation", "connection", and "fixing" need to be understood in a broad sense, for example, understood as a fixed connection or a detachable connection or integrally connected; or understood as a mechanical connection or an electrical connection; understood as a direct connection, or an indirect connection implemented through an intermediary; or understood as internal communication between two components or interaction between two components. A person of ordinary skill in the art can understand the specific meanings of the terms in the embodiments of this application according to specific situations.

Currently, as can be seen from the market trend, the application of power batteries is increasingly extensive. Power batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. The market demand for power batteries keeps expanding with the widening of the fields to which the power batteries are applicable.

The inventor of this application has noticed that some heat is generated inside a battery during charge-and-discharge cycles. When the heat accumulates a lot, an electrolytic solution evaporates and gradually dries up. Consequently, the charging efficiency decreases, electrode plates are deformed, an internal resistance increases, oxidation of mechanical parts are accelerated, and the electrode plate or separator is burned out, ending up with a reduced battery capacity and a shortened lifespan.

To overcome a series of adverse effects caused by battery heating, some countermeasures of lowering temperatures are employed in the related art. For example, a liquid cooling system is disposed inside the battery. A liquid in the liquid cooling system cools the battery and reduces the temperature. However, due to structural limitations of a battery cell, the space for arranging the liquid cooling system is relatively small, and the cooling effect is limited.

For example, in the related art, a battery cell includes a housing and an electrode core. The electrode core is disposed inside the housing. No space or little space exists between the bottom of the electrode core and the housing. A space between the top of the electrode core and the housing is available for arranging the liquid cooling system, but the positive tab and the negative tab are located on the top of the electrode core, and therefore, in the space between the top of the electrode core and the housing, the space available or arranging the liquid cooling system is very small, and the cooling effect is not good.

Through further research, the inventor holds that, in order to increase space for arranging the liquid cooling system, the positive tab and the negative tab located between the electrode core and the top of the housing may be arranged on a side face of the housing. In this way, the space between the electrode core and the top of the housing is vacated for the sole purpose of arranging the liquid cooling system. However, after such an arrangement is made, in order to dispose the positive tab and the negative tab on the side face of the housing, more connecting wires need to be used, thereby making the wiring in the battery cell more complicated and reducing safety. Therefore, the structure of the battery cell needs to be improved.

Based on the foregoing investigation, the inventor discloses a battery cell with an improved structure. In the battery cell according to an embodiment of this application, a relatively large space exists between the top of the electrode core and the housing of the positive tab and the negative tab, and a larger space is reserved to arrange the liquid cooling system to effectively improve the cooling effect and prevent the heat from accumulating inside the battery cell and affecting the lifespan of the battery.

The battery cell disclosed in this embodiment of this application is applicable to, but without being limited to, electrical devices such as a vehicle, watercraft, or aircraft. A power supply system of the electrical devices may contain the battery cell, the battery and the like disclosed in this application to help accelerate heat dissipation of the battery cell, prevent overtemperature of the battery, prevent evaporation and gradual drying-up of the electrolytic solution, avoid problems such as decline of the charging efficiency, deformation of the electrode plate, increase of the internal resistance, accelerated oxidation of mechanical parts, and burn-out of electrode plates or separator, and effectively increase the lifespan of the battery.

An embodiment of this application provides an electrical device that uses a battery as a power supply. The battery is configured to supply electrical energy to the electrical device. The electrical device may be, but without being limited to, a mobile phone, a portable device, a notebook computer, an electric power cart, an electric vehicle, a ship, a spacecraft, an electric toy, an electric tool, or the like. For example, the spacecraft includes an airplane, a rocket, a space shuttle, a spaceship, and the like. The electric toy includes a fixed or mobile electric toy, such as a game console, an electric car toy, an electric ship toy, an electric airplane toy, and the like. The electric tool includes an electric tool for metal cutting, an electric grinding tool, an electric assembly tool, an electric tool for railways, such as an electric drill, an electric grinder, an electric wrench, an electric screwdriver, an electric hammer, an electric impact drill, a concrete vibrator, or an electric planer.

For ease of description in the following embodiments, a vehicle 1000 is used as an example of the electrical device disclosed in some embodiments of this application.

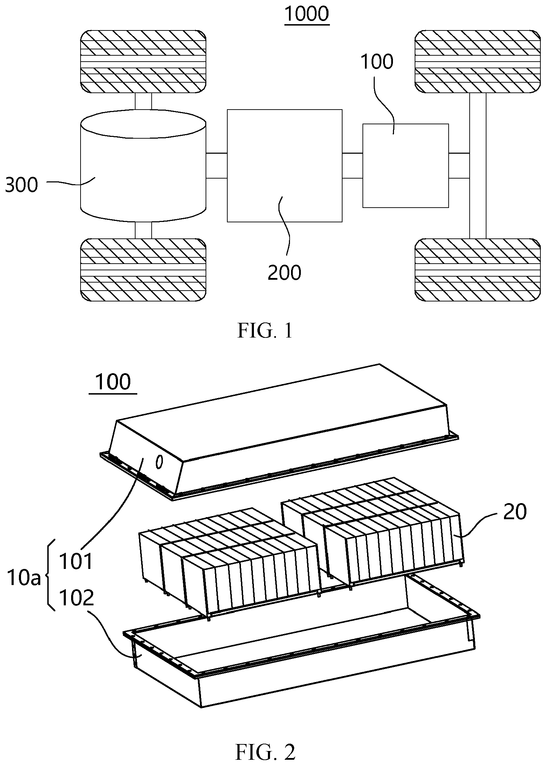

Referring to FIG. 1, FIG. 1 is a schematic structural diagram of a vehicle 1000 according to some embodiments of this application. The vehicle 1000 may be an oil-fueled vehicle, a natural gas vehicle, or a new energy vehicle. The new energy vehicle may be a battery electric vehicle, a hybrid electric vehicle, a range-extended electric vehicle, or the like. A battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power supply of the vehicle 1000. The vehicle 1000 may further include a controller 200 and a motor 300. The battery 100 is configured to supply electrical energy to the motor 300 and other components in the vehicle. The controller 200 is configured to control the motor 300 to work, for example, to meet electrical energy requirements in starting, navigating, or running the vehicle 1000.

In some embodiments of this application, the battery 100 serves not only as an operating power supply of the vehicle 1000, but may also serve as a drive power supply of the vehicle 1000 to provide driving power for the vehicle 1000 in place of or partially in place of oil or natural gas.

Referring to FIG. 2, FIG. 2 is an exploded view of a battery 100 according to some embodiments of this application. The battery 100 includes a shell 10a and a battery cell 20. The battery cell 20 is accommodated in the shell 10a. The shell 10a is configured to provide an accommodation space for the battery cell 20. The structure of the shell 10a may be diversified. In some embodiments, the shell 10a may include a first cover body 101 and a second cover body 102. The first cover body 101 and the second cover body 102 fit each other. The first cover body 101 and the second cover body 102 together define an accommodation space configured to accommodate the battery cell 20. The second cover body 102 may be a hollowed-out structure that is opened at one end. The first cover body 101 may be a plate-like structure. The first cover body 101 fits on an opening of the second cover body 102 so that the first cover body 101 and the second cover body 102 together define the accommodation space. Alternatively, both the first cover body 101 and the second cover body 102 may be hollowed-out structures, each being opened at one side. The opening of the first cover body 101 fits the opening of the second cover body 102. Definitely, the shell 10a formed by the first cover body 101 and the second cover body 102 may be in various shapes, such as a cylinder or a cuboid.

The battery 100 may contain a plurality of battery cells 20. The plurality of battery cells 20 may be connected in series, parallel, or series-and-parallel pattern. The series-and-parallel pattern means a combination of series connection and parallel connection of the plurality of battery cells 20. The plurality of battery cells 20 may be directly connected in series, parallel, or series-and-parallel pattern, and then the whole of the plurality of battery cells 20 may be accommodated in the shell 10a. Alternatively, the plurality of battery cells 20 may be connected in series, parallel, or series-and-parallel pattern to form a battery 100 that is in the form of a battery module. A plurality of battery modules are then connected in series, parallel, or series-and-parallel pattern to form a whole for being accommodated in the shell 10a. The battery 100 may further include other structures. For example, the battery 100 may further include a busbar component. The busbar component is configured to implement electrical connection between the plurality of battery cells 20.

The battery cell 20 is a minimum unit for making up a battery. The battery cells 20 include a lithium-ion secondary battery, a lithium-ion primary battery, a lithium-sulfur battery, a sodium-lithium-ion battery, a sodium-ion battery, a magnesium-ion battery, or the like, without being limited in embodiments of this application. The battery cell may be in a cylindrical shape, a flat shape, a cuboidal shape, or other shapes, without being limited in embodiments of this application. Depending on the form of packaging, the battery cell is typically classed into three types: cylindrical cell, prismatic cell, and pouch-type cell, without being limited in embodiments of this application.

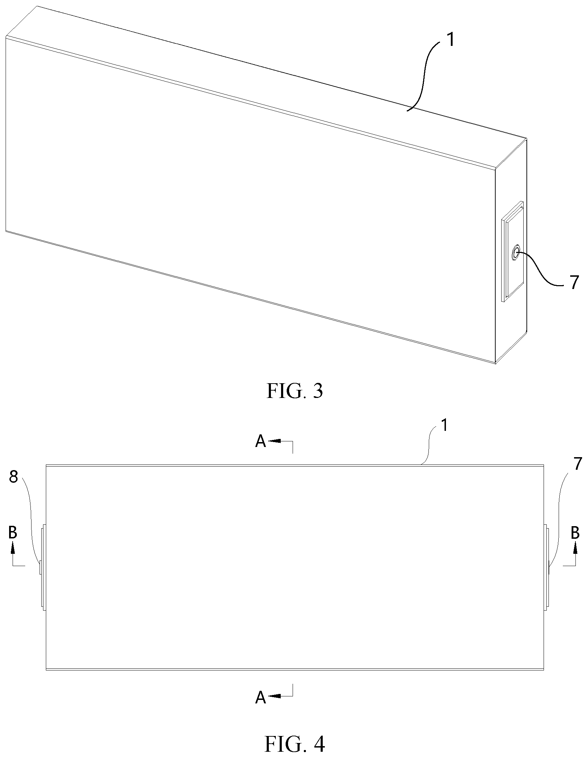

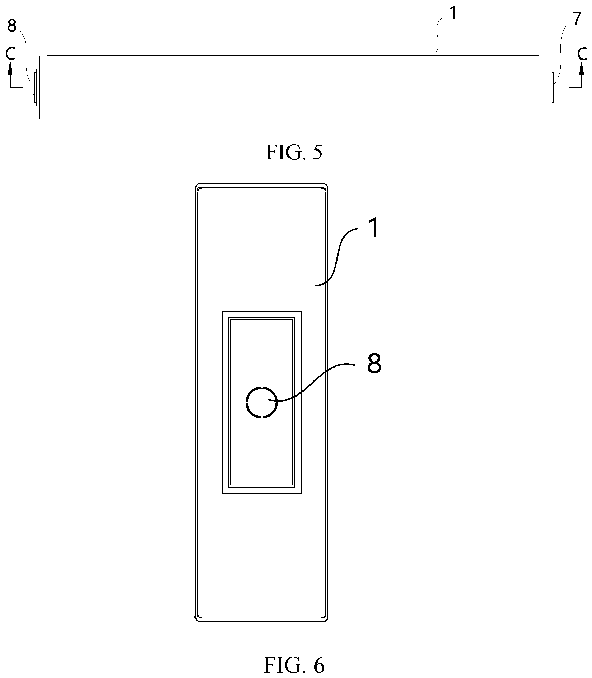

Refer to FIG. 3 to FIG. 6, which are a three-dimensional view, front view, top view, and left view, respectively, of a battery cell 20 according to some embodiments of this application. In some embodiments of this application, the battery cell 20 includes a housing 1 and an electrode assembly. The electrode assembly is disposed inside the housing 1. The electrode assembly is a component that reacts electrochemically in the battery cell 20.

The housing 1 is a component configured to provide an accommodation space for accommodating the electrode assembly, an electrolytic solution, and other components. The housing 1 includes an accommodation body with an opening, and an end cap configured to close the opening. The accommodation body and the end cap may be stand-alone components. An opening is made on the accommodation body. At the opening, the end cap fits the opening to form an internal environment of the battery cell 20. Without constituting any limitation, the end cap and the accommodation body may be integrated instead. Specifically, the end cap and the accommodation body may form a common connection interface first before other components are put into the housing. When the accommodation body needs to be sealed, the end cap is made to fit the accommodation body so that the accommodation body and the end cap are sealed in one piece.

The accommodation body is a component configured to fit with the end cap to form an internal environment of the battery cell 20. The end cap is a component that fits the opening of the accommodation body to isolate the internal environment of the battery cell 20 from the external environment. Without constituting any limitation, the shape of the end cap may be adapted to the shape of the accommodation body to fit with the accommodation body. Optionally, the end cap may be made of a material that is appropriately hard and strong, so that the end cap is not prone to deform under an extrusion force or expansion force. In this way, the battery cell 20 achieves higher structural strength and higher safety performance.

In some embodiments, the end cap may be equipped with a pressure relief mechanism configured to release an internal pressure when the internal pressure or temperature of the battery cell 20 reaches a threshold.

The housing 1 may be in various shapes and sizes, such as a cuboid, cylinder, or hexagonal prism. Specifically, the shape of the housing 1 may be determined depending on the specific shape and size of the electrode assembly. The material of the housing 1 may be copper, iron, aluminum, stainless steel, aluminum alloy, or plastic.

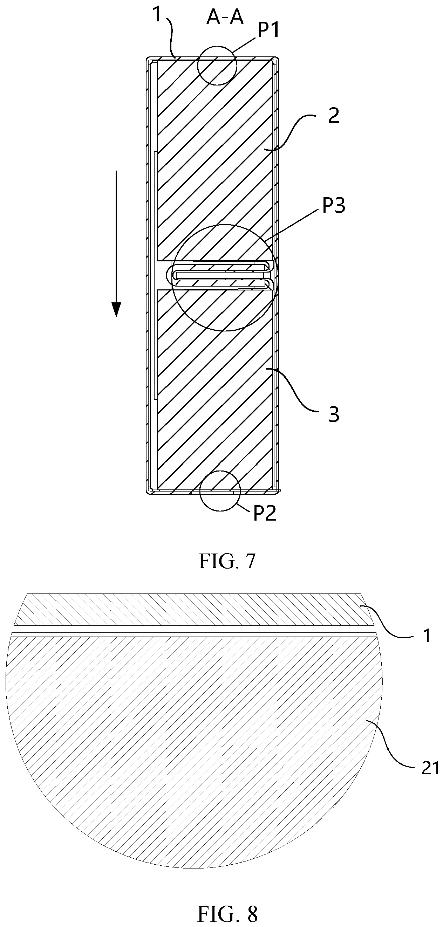

Referring to FIG. 7 to FIG. 12, in some embodiments of this application, a battery cell includes the housing 1, a first electrode assembly 2, and a second electrode assembly 3. The first electrode assembly 2 is disposed in the housing 1. The first electrode assembly 2 includes a first body portion 21, and a first positive tab 22 and a first negative tab 23 that extend from the first body portion 21. The second electrode assembly 3 is disposed in the housing 1. The second electrode assembly 3 includes a second body portion 31, and a second positive tab 32 and a second negative tab 33 that extend from the second body portion 31.

The first body portion 21 and the second body portion 31 are spaced out along a first direction. The first positive tab 22 and the first negative tab 23 are disposed at an end of the first body portion 21, where the end is closer to the second body portion 31 along the first direction. The second positive tab 32 and the second negative tab 33 are disposed at an end of the second body portion 31, where the end is closer to the first body portion 21 along the first direction.

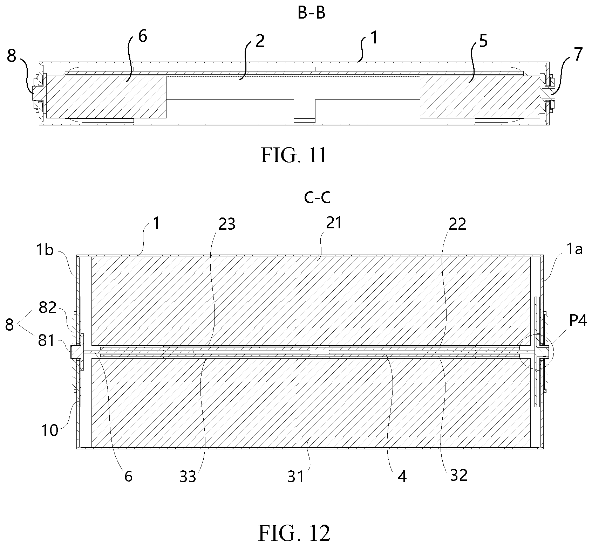

As shown in FIG. 12, the first positive tab 22 and the first negative tab 23 extend downward out of the bottom of the first body portion 21 separately. The second positive tab 32 and the second negative tab 33 extend upward out of the top of the second body portion 31 separately. The first positive tab 22, the first negative tab 23, the second positive tab 32, and the second negative tab 33 are all located in a clearance between the first body portion 21 and the second body portion 31.

In some of the above embodiments, the first body portion 21 and the second body portion 31 are spaced out along the first direction, and the first positive tab 22, the first negative tab 23, the second positive tab 32, and the second negative tab 33 are all disposed between the first body portion 21 and the second body portion 31. In this way, a space is reserved for arranging a liquid cooling system between the housing 1 and the end that is of the first body portion 21 and that is away from the second body portion 31, and/or between the housing 1 and the end that is of the second body portion 31 and that is away from the first body portion 21. As shown in FIG. 8, in contrast to a technical solution in which the first positive tab 22, the first negative tab 23, the second positive tab 32, and the second negative tab 33 are all disposed in the space between the electrode core and the top of the housing, this technical solution of this application significantly increases the space for arranging the liquid cooling system, effectively enhances the cooling effect, and prevents overtemperature of the battery cell, thereby preventing evaporation and gradual drying-up of the electrolytic solution, avoiding problems such as decline of the charging efficiency, deformation of the electrode plate, increase of the internal resistance, accelerated oxidation of mechanical parts, and burn-out of electrode plates or separator, and effectively increasing the lifespan of the battery.

In some of the above embodiments, the electrode assembly disposed in a single battery cell includes two parts: a first electrode assembly 2 and a second electrode assembly 3. The first positive tab 22, the first negative tab 23, the second positive tab 32, and the second negative tab 33 are all disposed between the first body portion 21 and the second body portion 31. To be specific, by making the electrode assembly include two parts between which the positive tab and the negative tab are disposed, this embodiment of this application makes it unnecessary to dispose the positive tab and the negative tab on the side face of the electrode assembly, and unnecessary to increase the length of the connecting wire due to the disposition on the side face of the electrode assembly. Therefore, this embodiment of this application not only increases the space available for arranging the liquid cooling system and improves the cooling effect, but also avoids increase of the length of the connecting wire, and avoids increase of complexity of the internal wiring of the battery cell.

In some embodiments, the first body portion 21 includes a first positive electrode plate and a first negative electrode plate. The second body portion 31 is disposed in the housing 1. The second body portion 31 includes a second positive electrode plate and a second negative electrode plate. At an end closer to the second body portion 31 along the first direction, the first positive electrode plate in the first body portion 21 protrudes beyond the first body portion 21 to form the first positive tab 22. At an end closer to the second body portion 31 along the first direction, the first negative electrode plate in the first body portion 21 protrudes beyond the first body portion 21 to form the first negative tab 23. At an end closer to the first body portion 21 along the first direction, the second positive electrode plate in the second body portion 31 protrudes beyond the second body portion 31 to form the second positive tab 32. At an end closer to the first body portion 21 along the first direction, the second negative electrode plate in the second body portion 31 protrudes beyond the second body portion 31 to form the second negative tab 33.

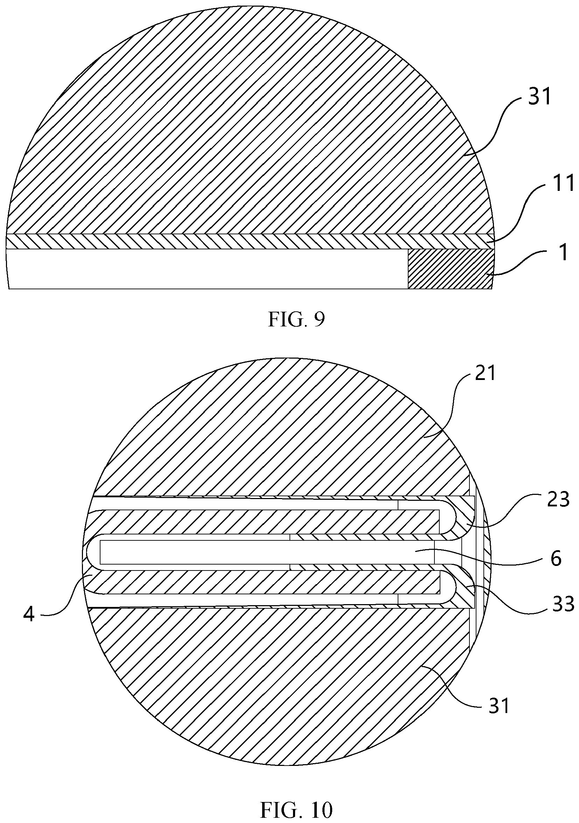

As shown in FIG. 10, the first negative tab 23 extends from the first body portion 21 toward the second body portion 31 first, and then extends transversely along a direction perpendicular to the first direction, so as to form a U-shaped structure on which an opening is made. The second negative tab 33 extends from the second body portion 31 toward the first body portion 21 first, and then extends transversely along a direction perpendicular to the first direction, so as to form a U-shaped structure on which an opening is made. The first positive tab 22 and the second positive tab 32 may be formed in a way similar to the way of forming the first positive tab 22 and the second positive tab 32, details of which are omitted here.

In some embodiments, the battery cell further includes a first adapter piece 5, a second adapter piece 6, a positive post 7, and a negative post 8. The first positive tab 22 and the second positive tab 32 are both connected to the first adapter piece 5. The first adapter piece 5 is connected to the positive post 7. The first negative tab 23 and the second negative tab 33 are both connected to the second adapter piece 6. The second adapter piece 6 is connected to the negative post 8.

In some of the above embodiments, the first positive tab 22 and the second positive tab 32 are both connected to the first adapter piece 5. The first negative tab 23 and the second negative tab 33 are both connected to the second adapter piece 6. Therefore, the first electrode assembly 2 and the second electrode assembly 3 share an adapter piece, thereby reducing the number of components of the battery cell 20 and saving cost. In addition, the sharing of the adapter piece also simplifies the internal structural layout of the battery cell 20, saves space, and reduces the size of the battery cell 20.

As shown in FIG. 10 and FIG. 12, the first positive tab 22 may be arranged opposite to the second positive tab 32. The first negative tab 23 may be arranged opposite to the second negative tab 33, so as to facilitate arrangement of the first adapter piece 5 connected to the first positive tab 22 and the second positive tab 32 as well as the second adapter piece 6 connected to the first negative tab 23 and the second negative tab 33.

In some embodiments, the positive post 7 is mounted on a first end face of the housing 1, and the negative post 8 is mounted on a second end face of the housing 1. The first end face is disposed opposite to the second end face, and both the first end face and the second end face are parallel to the first direction.

The positive post 7 and the negative post 8 are disposed on the two ends perpendicular to the first direction of the housing 1 respectively. In this way, the first positive tab 22 and the second positive tab 32 that are located between the first body portion 21 and the second body portion 31 can be conveniently connected to the positive post 7 by extending transversely, and the first negative tab 23 and the second negative tab 33 that are located between the first body portion 21 and the second body portion 31 can be conveniently connected to the negative post 8 by extending transversely, thereby shortening the first adapter piece 5 and the second adapter piece 6. Circuit loss and heat emission can be reduced by shortening the first adapter piece 5 and the second adapter piece 6.

In some embodiments, the battery cell includes a first end cap 1a and a second end cap 1b. A first opening is made on the first end face of the housing 1, and a second opening is made on the second end face of the housing 2. The first end cap 1a is configured to seal the first opening, and the second end cap 1b is configured to seal the second opening. The positive post 7 is mounted on the first end cap 1a, and the negative post 8 is mounted on the second end cap 1b.

As shown in FIG. 12, FIG. 13, FIG. 15, and FIG. 16, the positive post 7 includes a first inner post 71 and a first outer post 72. The first sleeve 7a is mounted on the first end cap 1a. The first outer post 72 is disposed on an outer side of the first end cap 1a and connected to the first sleeve 7a. The first adapter piece 5 is connected to a first end of the first inner post 71. A second end of the first inner post 71 passes through the first sleeve 7a and is connected to the first sleeve 7a on an outer side of the housing 1. Compared with the inner side, the outer side of the housing 1 provides a larger operation space. Therefore, the first inner post 71 and the first sleeve 7a are fixed and connected on the outer side of the housing 1, thereby making the operation more convenient and helping to improve the assembling efficiency.

The positive post 7 containing the first inner post 71 and the first outer post 72 is disposed, the first sleeve 7a is disposed, and the first sleeve 7a is mounted on the first end cap 1a. During assembling of the battery cell, the first adapter piece 5 may be connected to the first end of the first inner post 71 first, and then the electrode assembly is put into the housing 1. Subsequently, during sealing of the first end cap 1a, the second end of the first inner post 71 is passed out of the housing 1 through the first sleeve 7a. After the first end cap 1a is fixed, the first inner post 71 is connected to the first sleeve 1a on the outer side of the housing 1. In this way, the first inner post 71 and the first outer post 72 are connected together through the first sleeve 1a to form the positive post 7.

The first sleeve 7a includes a first sleeve portion and a first limiting portion. A first through-hole is made on the first end cap 1a. The first sleeve portion is inserted into the first through-hole. The first limiting portion is connected to the first sleeve portion. The first limiting portion is located on the inner side of the first end cap 1a. The first limiting portion is larger than the first through-hole in size, so as to limit the position of the first sleeve portion and prevent the first sleeve portion from detaching from the first through-hole.

A second through-hole that runs through the first sleeve is made at the center of the first sleeve 7a. The first inner post 71 includes a first post portion and a second limiting portion. The first post portion is inserted into the second through-hole. The second limiting position is connected to the first post portion. The second limiting portion is located on the inner side of the first sleeve 7a. The second limiting portion is larger than the second through-hole in size. The second limiting portion is in contact with the first limiting portion, so as to limit the position of the first post portion and prevent the first post portion from detaching from the second through-hole. The first outer post 72 is configured to be electrically connected to a positive electrode of an electrical component.

The way of connecting the negative post 8 to the second end cap 1b may be the same as or different from the way of connecting the positive post 7 to the first end cap 1a. For example, a second sleeve 8a may be disposed between the negative post 8 and the second end cap 1b, or the second sleeve 8a may be omitted.

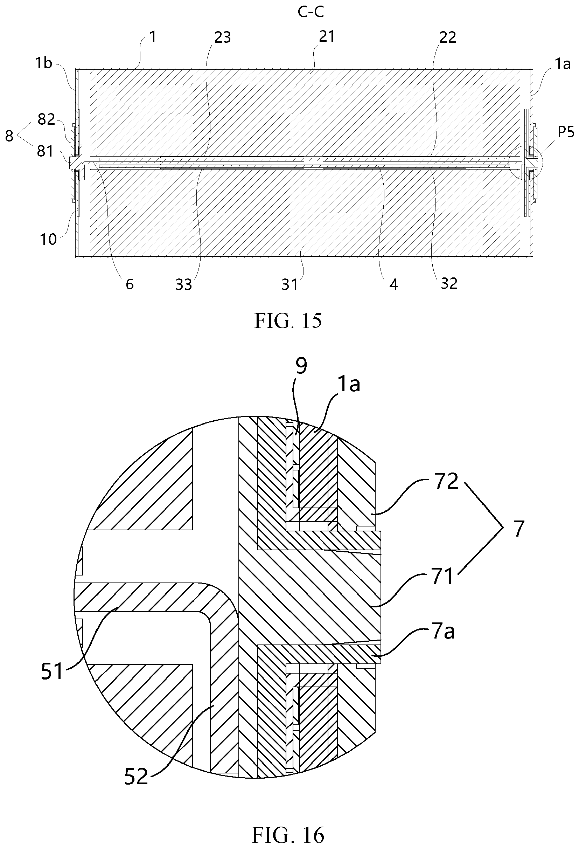

In the embodiments shown in FIG. 12 and FIG. 15, the second sleeve 8a is omitted between the negative post 8 and the second end cap 1b. The negative post 8 includes a second inner post 81 and a second outer post 82. The second outer post 82 is disposed on the outer side of the second end cap 1b. A first end of the second inner post 81 is located on the inner side of the second end cap 1b and connected to the second adapter piece 6. A second end of the second inner post 81 passes through the second end cap 1b and is connected to the second outer post 82.

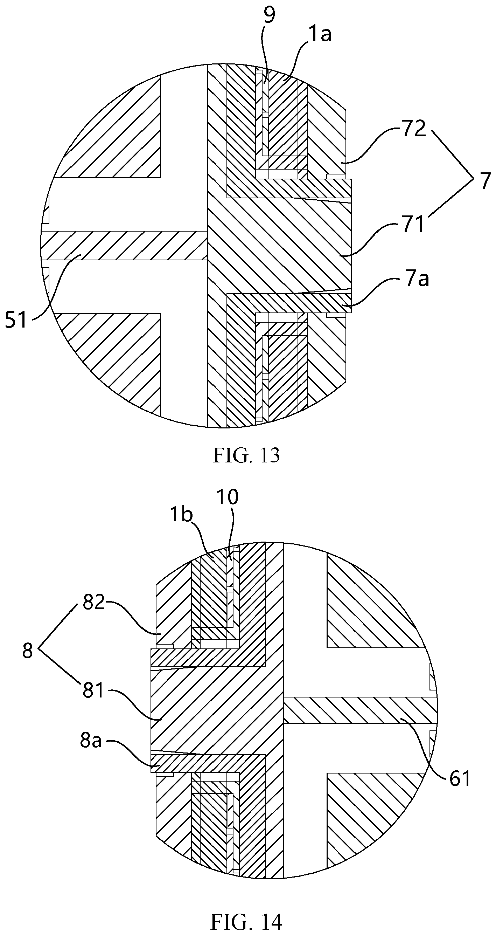

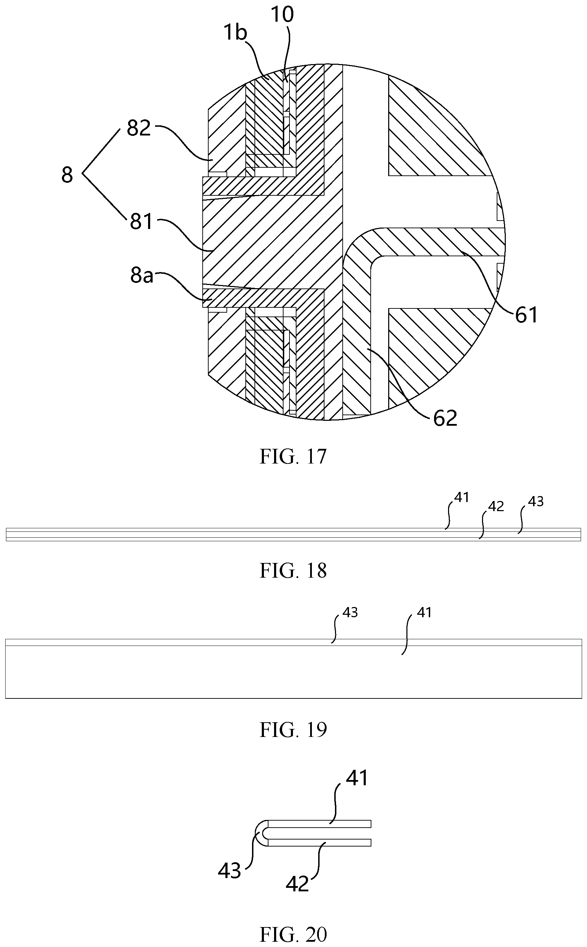

In the embodiments shown in FIG. 14 and FIG. 17, the second sleeve 8a is disposed between the negative post 8 and the second end cap 1b. The negative post 8 includes a second inner post 81 and a second outer post 82. The second sleeve 8a is mounted on the second end cap 1b. The second outer post 82 is disposed on an outer side of the second end cap 1b and connected to the second sleeve 8a. The second adapter piece 6 is connected to a second end of the second inner post 81. The second end of the second inner post 81 passes through the second sleeve 8a and is connected to the second sleeve 8a on an outer side of the housing 1. Compared with the inner side, the outer side of the housing 1 provides a larger operation space. Therefore, the second inner post 81 and the second sleeve 8a are fixed and connected on the outer side of the housing 1, thereby making the operation more convenient and helping to improve the assembling efficiency.

The negative post 8 containing the second inner post 81 and the second outer post 82 is disposed, the second sleeve 8a is disposed, and the second sleeve 8a is mounted on the second end cap 1b. During assembling of the battery cell, the second adapter piece 6 may be connected to the first end of the second inner post 81 first, and then the electrode assembly is put into the housing 1. Subsequently, during sealing of the second end cap 1b, the second end of the second inner post 81 is passed out of the housing 1 through the second sleeve 8a. After the second end cap 1b is fixed, the second inner post 81 is connected to the second sleeve 8a on the outer side of the housing 1. In this way, the second inner post 81 and the second outer post 82 are connected together through the second sleeve 8a to form the negative post 8.

The second sleeve 8a includes a second sleeve portion and a third limiting portion. A third through-hole is made on the second end cap 1b. The second sleeve portion is inserted into the third through-hole. The third limiting portion is connected to the second sleeve portion. The third limiting portion is located on the inner side of the second end cap 1b. The third limiting portion is larger than the third through-hole in size, so as to limit the position of the second sleeve portion and prevent the second sleeve portion from detaching from the third through-hole.

A fourth through-hole that runs through the second sleeve is made at the center of the second sleeve 8a. The second inner post 81 includes a first post portion and a fourth limiting portion. The first post portion is inserted into the fourth through-hole. The fourth limiting position is connected to the first post portion. The fourth limiting portion is located on the inner side of the second sleeve 8a. The fourth limiting portion is larger than the fourth through-hole in size. The fourth limiting portion is in contact with the third limiting portion, so as to limit the position of the first post portion and prevent the first post portion from detaching from the fourth through-hole. The second outer post 82 is configured to be electrically connected to a positive electrode of an electrical component.

In the embodiments shown in FIG. 12 and FIG. 15, a battery cell may be assembled according to the following steps: mounting the second inner post 81 and the second outer post 82 onto the second end cap 1b outside the housing 1 before the electrode assembly is put into the housing 1; connecting the second adapter piece 6 to the first negative tab 23 and the second negative tab 33, and then connecting the second adapter piece 6 to the second inner post 81; connecting the first adapter piece 5 to the first positive tab 22 and the second positive tab 32, and then connecting the first adapter piece 5 to the first inner post 71; subsequently, putting the whole of the second end cap 1b, the negative post 8, the second adapter piece 6, the electrode assembly, the first adapter piece 5, and the first inner post 71 into the housing 1; finally, sealing the first end cap 1a onto the second end face of the housing 1, where the first outer post 72 and the first sleeve 7a have been mounted onto the first end cap 1a, so that the second end of the first inner post 71 is passed out of the housing from the outer side of the housing 1. In this way, the first inner post 71 and the first sleeve 7a are connected by welding on the outer side of the housing 1 to complete the assembling.

In the embodiments shown in FIG. 14 and FIG. 17, a second sleeve 8a is disposed between the negative post 8 and the second end cap 1b. Therefore, the assembling may be performed with reference to the assembling method of the first end cap 1a described above, and the assembling steps include: connecting the first inner post 71 to the first adapter piece 5, connecting the second inner post 81 to the second adapter piece 6, and then putting the electrode assembly into the housing 1, sealing the first end cap 1a, connecting the first inner post 71 to the second sleeve 7a, sealing the second end cap 1b, and then connecting the second inner post 81 and the second sleeve 8a.

A variety of structures of the first adapter piece 5 and the second adapter piece 6 are available for selection.

For example, in the embodiments shown in FIG. 12 and FIG. 13, the first adapter piece 5 includes a first connecting portion 51 extending in a direction perpendicular to the first direction. The first connecting portion 51 is connected to the first positive tab 22 and the second positive tab 32. An end of the first connecting portion 51, which is closer to the positive post 7, is connected to the positive post 7.

In the embodiments shown in FIG. 15 and FIG. 16, the first adapter piece 5 includes a first connecting portion 51 extending in a direction perpendicular to the first direction and a second connecting portion 52 extending in a direction parallel to the first direction. The first connecting portion 51 and the second connecting portion 52 are connected to form an L shape. The first connecting portion 51 is connected to the first positive tab 22 and the second positive tab 32. The second connecting portion 52 is connected to the positive post 7. This structure enhances stability of connection between the first adapter piece 5 and the positive post 7 by increasing the contact area between the second connecting portion 52 and the positive post 7.

Similarly, in the embodiments shown in FIG. 12 and FIG. 14, the second adapter piece 6 includes a third connecting portion 61 extending in a direction perpendicular to the first direction. The third connecting portion 61 is connected to the first negative tab 23 and the second negative tab 33. An end of the third connecting portion 61, which is closer to the negative post 8, is connected to the negative post 8.

In the embodiments shown in FIG. 15 and FIG. 17, the second adapter piece 6 includes a third connecting portion 61 extending in a direction perpendicular to the first direction and a fourth connecting portion 62 extending in a direction parallel to the first direction. The third connecting portion 61 and the fourth connecting portion 62 are connected to form an L shape. The third connecting portion 61 is connected to the first negative tab 23 and the second negative tab 33. The fourth connecting portion 62 is connected to the negative post 8. This structure enhances stability of connection between the second adapter piece 6 and the negative post 8 by increasing the contact area between the fourth connecting portion 62 and the negative post 8.

In some embodiments, the battery cell 20 further includes a first insulation piece 9 disposed in the housing 1, and the first insulation piece 9 is configured to electrically isolate the positive post 7 from the housing 1; and/or the battery cell 20 further includes a second insulation piece 10 disposed in the housing 1, and the second insulation piece 10 is configured to electrically isolate the negative post 8 from the housing 1.

Electrical connection between the positive post 7 and the negative post 8, which is caused by contact with the housing 1 and results in a short circuit, can be prevented by the first insulation piece 9 capable of electrically isolating the positive post 7 from the housing 1, and by the second insulation piece 10 capable of electrically isolating the negative post 8 from the housing 1. The short circuit impairs safety of the battery cell, and may cause functional failure of the battery cell.

In some embodiments, the battery cell further includes a support plate 11. The support plate 11 is disposed between the housing 1 and an end that is of the second body portion 31 and that is away from the first body portion 21.

As shown in FIG. 9, with a support plate 11 disposed between the housing 1 and the end that is of the second body portion 31 and that is away from the first body portion 21, a contact surface of the end that is of the second body portion 31 and that is away from the first body portion 21 is made to be a flat face, thereby helping to keep the electrode assembly steady. Moreover, by increasing the length of the support plate 11, the length of the support plate 11 is made to be greater than the length of the electrode assembly, thereby preventing the left structure and the right structure of the housing 1 from squeezing the first body portion 21 and the second body portion 31 and from affecting the current output of the first body portion 21 and the second body portion 31.

In some embodiments, the support plate 11 is insulated from the housing 1, and the end that is of the first body portion 21 and that is away from the second body portion 31 is insulated from the housing 1. An advantage of such an arrangement is that both the first body portion 21 and the second body portion 31 keep insulated from the housing 1, so as to prevent the housing 1 from being electrified and avoid accidents such as electric shock.

As shown in FIG. 8, a preset clearance exists between the housing 1 and the end that is of the first body portion 21 and that is away from the second body portion 31. The clearance not only keeps insulation between the housing 1 and the end that is of the first body portion 21 and that is away from the second body portion 31, but also reserves a space for arranging a liquid cooling system between the housing 1 and the end that is of the first body portion 21 and that is away from the second body portion 31, thereby effectively improving the cooling effect and avoiding overtemperature of the battery cell 20.

In some embodiments, the battery cell 20 further includes a bracket 4. The bracket 4 is disposed between the first body portion 21 and the second body portion 31.

The bracket 4 serves to support the first body portion 21 and the second body portion 31, keep the first body portion 21 and the second body portion 31 in preset positions, and prevent the first body portion 21 and the second body portion 31 from being offset against the housing 1 due to gravity or an external force or other factors, and from affecting the stability of the liquid cooling system disposed between the housing 1 and the end that is of the first body portion 21 and that is away from the second body portion 31, and from affecting the cooling effect.

For example, in an application scenario where the first body portion 21 and the second body portion 31 are arranged vertically, the bracket 4 may support the first body portion 21 located above, so as to prevent the second body portion 31 from being squeezed by the gravity of the first body portion 21 and prevent the second body portion 31 from being crushed. Moreover, by supporting the first body portion 21, the bracket 4 prevents the first body portion 21 located above from moving downward due to gravity. The downward movement pulls the liquid cooling system disposed between the first body portion 21 and the housing 1, leads to instability of the liquid cooling system, and affects the cooling effect.

In some embodiments, the first body portion 21 includes a first positive electrode plate, a first negative electrode plate, and a first separator configured to keep insulation between the first positive electrode plate and the first negative electrode plate. The second body portion 31 includes a second positive electrode plate, a second negative electrode plate, and a second separator configured to keep insulation between the second positive electrode plate and the second negative electrode plate. The bracket 4 serves as a support between the first separator and the second separator. The advantage of such an arrangement is that the bracket 4 is prevented from crushing the first positive electrode plate, the first negative electrode plate, the second positive electrode plate, and the second negative electrode plate, and the arrangement helps to protect the first positive electrode plate, the first negative electrode plate, the second positive electrode plate, and the second negative electrode plate and increase the lifespan of the electrode plates.

To enable the bracket 4 to serve as a support between the first separator and the second separator, an end that is of the first separator and that is closer to the second body portion 31 along the first direction may protrude beyond the first body portion 21, so that the end that is of the first separator and that is closer to the second body portion 31 along the first direction can extend beyond the first positive electrode plate and the first negative electrode plate. In this way, the first separator can contact the bracket 4, and the first separator keeps being supported by the bracket 4, thereby protecting the first positive electrode plate and the first negative electrode plate from being squeezed. An end that is of the second separator and that is closer to the first body portion 21 along the first direction may protrude beyond the second body portion 31, so that the end that is of the second separator and that is closer to the first body portion 21 along the first direction can extend beyond the second positive electrode plate and the second negative electrode plate. In this way, the second separator can contact the bracket 4, and the second separator keeps being supported by the bracket 4, thereby protecting the second positive electrode plate and the second negative electrode plate from being squeezed.

It is hereby noted that, in order to form the first positive tab 22, the end that is of the first positive electrode plate and that is closer to the second body portion 31 along the first direction needs to protrude beyond the first body portion 21, that is, the end that is of the first positive electrode plate and that is closer to the second body portion 31 along the first direction needs to extend beyond the first negative electrode plate and the first separator. In order to form the first negative tab 23, the end that is of the first negative electrode plate and that is closer to the second body portion 31 along the first direction needs to protrude beyond the first body portion 21, that is, the end that is of the first negative electrode plate and that is closer to the second body portion 31 along the first direction needs to extend beyond the first positive electrode plate and the first separator. In order to enable the bracket 4 to support the first separator, the end that is of the first separator and that is closer to the second body portion 31 along the first direction needs to protrude beyond the first body portion 21, that is, the end that is of the first separator and that is closer to the second body portion 31 along the first direction needs to extend beyond the first positive electrode plate and the first negative electrode plate. Such three arrangements tend to be misunderstood as contradicting each other, but they are not contradictory because an end face that is of the first body portion 21 and that is closer to the second body portion 31 possesses a preset area. No matter whether the purpose is to form the first positive tab 22 or the first negative tab 23 or enable the bracket 4 to support the first separator, the corresponding arrangement can be implemented in a preset region, and different regions in the entire end face that is of the first body portion 21 and that is closer to the second body portion 31 are not necessarily made into the same structure. Therefore, the corresponding purpose can be fulfilled by arrangement in different regions.

Similarly, it is hereby noted that, in order to form the second positive tab 32, the end that is of the second positive electrode plate and that is closer to the first body portion 21 along the first direction needs to protrude beyond the second body portion 31, that is, the end that is of the second positive electrode plate and that is closer to the first body portion 21 along the first direction needs to extend beyond the second negative electrode plate and the first separator. In order to form the second negative tab 33, the end that is of the second negative electrode plate and that is closer to the first body portion 21 along the first direction needs to protrude beyond the second body portion 31, that is, the end that is of the second negative electrode plate and that is closer to the first body portion 21 along the first direction needs to extend beyond the second positive electrode plate and the first separator. In order to enable the bracket 4 to support the second separator, the end that is of the second separator and that is closer to the first body portion 21 along the first direction needs to protrude beyond the second body portion 31, that is, the end that is of the second separator and that is closer to the first body portion 21 along the first direction needs to extend beyond the second positive electrode plate and the second negative electrode plate. Such three arrangements tend to be misunderstood as contradicting each other, but they are not contradictory because an end face that is of the second body portion 31 and that is closer to the first body portion 21 possesses a preset area. No matter whether the purpose is to form the second positive tab 32 or the second negative tab 33 or enable the bracket 4 to support the second separator, the corresponding arrangement can be implemented in a preset region, and different regions in the entire end face that is of the second body portion 31 and that is closer to the first body portion 21 are not necessarily made into the same structure. Therefore, the corresponding purpose can be fulfilled by arrangement in different regions.

In some embodiments, the bracket 4 includes a first support portion 41, a second support portion 42, and a third support portion 43 connected between the first support portion 41 and the second support portion 42. The first support portion 41 is configured to serve as a support between the first body portion 21 and a first positive tab 22 and a support between the first body portion 21 and a first negative tab 23. The second support portion 42 is configured to serve as a support between the second body portion 31 and a second positive tab 32 and a support between the second body portion 31 and a second negative tab 33. The advantages of the bracket 4 with such a structure are: when the battery cell 20 is in a working state, no matter whether the first electrode assembly 2 or the second electrode assembly 3 is located above, the first electrode assembly 2 and the second electrode assembly 3 can be supported effectively, thereby facilitating installation and operation.

As shown in FIG. 16 to FIG. 18, a side view of the bracket 4 is U-shaped. Such a structure can support the first electrode assembly 2 and the second electrode assembly 3 through the first support portion 41 and the second support portion 42 respectively. The first support portion 41 may be inserted into an opening formed by bending the first positive tab 22 and the first negative tab 23 separately. The second support portion 42 may be inserted into an opening formed by bending the second positive tab 32 and the second negative tab 33 separately.

In some embodiments, the battery cell 20 further includes a liquid cooling system. The liquid cooling system is disposed between the housing 1 and an end that is of the first body portion 21 and that is away from the second body portion 31. The first positive tab 22, the first negative tab 23, the second positive tab 32, and the second negative tab 33 are all disposed between the first body portion 21 and the second body portion 31. Therefore, the first positive tab 22, the first negative tab 23, the second positive tab 32, and the second negative tab 33 are prevented from occupying the space between the housing 1 and the end that is of the first body portion 21 and that is away from the second body portion 31, thereby increasing the space for arranging the liquid cooling system, enhancing the cooling effect, effectively controlling the temperature of the battery cell 20, and improving the safety performance and the lifespan of the battery cell 20.

In some embodiments, the first body portion 21 further includes a first separator, the first body portion 21 is formed by winding the first positive electrode plate, the first negative electrode plate, and the first separator together, and the first direction is parallel to a winding centerline of the first body portion 21; and/or, the second body portion 31 further includes a second separator, the second body portion 31 is formed by winding the second positive electrode plate, the second negative electrode plate, and the second separator together, and the first direction is parallel to a winding centerline of the second body portion 31. In such embodiments, the first body portion 21 and the second body portion 31 are both jelly-roll structures. In the case of a jelly-roll structure, the first direction is the winding centerline of the first body portion 21 and the second body portion 31.

In other embodiments, the first body portion 21 and the second body portion 31 may be manufactured by stacking the positive electrode plate, the negative electrode plate, and the separator in sequence. In the case of a stacked structure, a direction in which the positive and negative electrode plates protrude from two ends may be used as the first direction.

This application further provides a battery, including the battery cell.

This application further provides an electrical device, including the battery. The battery is configured to supply electrical energy to the electrical device.

This application further provides a method for manufacturing a battery cell, including:
providing a housing 1, a first electrode assembly 2, and a second electrode assembly 3, where the first electrode assembly 2 includes a first body portion 21, and a first positive tab 22 and a first negative tab 23 that extend from the first body portion 21, and the second electrode assembly 3 includes a second body portion 31, and a second positive tab 32 and a second negative tab 33 that extend from the second body portion 31;
disposing both the first electrode assembly 2 and the second electrode assembly 3 in the housing 1; and
spacing out the first body portion 21 and the second body portion 31 along a first direction, and disposing the first positive tab 22 and the first negative tab 23 at an end of the first body portion 21, where the end is closer to the second body portion 31 along the first direction; and disposing the second positive tab 32 and the second negative tab 33 at an end of the second body portion 31, where the end is closer to the first body portion 21 along the first direction.

This application further provides an apparatus for manufacturing a battery cell, and the manufacturing apparatus includes a providing apparatus and a placement apparatus. The providing apparatus is configured to provide a housing 1, a first electrode assembly 2, and a second electrode assembly 3. The first electrode assembly 2 includes a first body portion 21, and a first positive tab 22 and a first negative tab 23 that extend from the first body portion 21. The second electrode assembly 3 includes a second body portion 31, and a second positive tab 32 and a second negative tab 33 that extend from the second body portion 31. The placement apparatus is configured to dispose both the first electrode assembly 2 and the second electrode assembly 3 in the housing 1, space out the first body portion 21 and the second body portion 31 along a first direction, and dispose the first positive tab 22 and the first negative tab 23 at an end of the first body portion 21, where the end is closer to the second body portion 31 along the first direction; and dispose the second positive tab 32 and the second negative tab 33 at an end of the second body portion 31, where the end is closer to the first body portion 21 along the first direction.

The beneficial effects of each embodiment of the battery cell disclosed in this application are also applicable to the battery, the electrical device, the method for manufacturing a battery cell, and the apparatus for manufacturing a battery cell, and are not repeated here.

The following describes the structures of battery cells according to some embodiments of this application with reference to FIG. 3 to FIG. 16.

Refer to FIG. 3 to FIG. 6, which are a three-dimensional view, front view, top view, and left view, respectively, of a battery cell 20. The battery cell 20 includes a housing 1. The housing 1 includes an accommodation body, a first end cap, and a second end cap. A first opening is made at a left end of the accommodation body, and a second opening is made at a right end. The first end cap is configured to close the first opening, and the second end cap is configured to close the second opening. A negative post 8 is mounted on the first end cap, and a positive post 7 is mounted on the second end cap.

As shown in FIG. 7 to FIG. 12, a first electrode assembly 2 and a second electrode assembly 3 are disposed inside the housing 1. A first direction is a vertical direction, and the first electrode assembly 2 is disposed above the second electrode assembly 3. The first electrode assembly 2 and the second electrode assembly 3 are identical in structure, and are symmetric to each other vertically with respect to a midline between the first electrode assembly 2 and the second electrode assembly 3.

The first electrode assembly 2 includes a first body portion 21, and a first positive tab 22 and a first negative tab 23 that extend downward from the first body portion 21. The second electrode assembly 3 includes a second body portion 31, and a second positive tab 32 and a second negative tab 33 that extend upward from the second body portion 31. The first positive tab 22 and the second positive tab 32 are oppositely disposed at an end that is of the housing 1 and that is closer to the second end cap. The first negative tab 23 and the second negative tab 33 are oppositely disposed at an end that is of the housing 1 and that is closer to the first end cap.

The first positive tab 22, the first negative tab 23, the second positive tab 32, and the second negative tab 33 are all disposed between the first body portion 21 and the second body portion 31, The positive post 7 and the negative post 8 are disposed on the right side and the left side of the housing 1 respectively. Therefore, the first adapter piece 5 can be extended to the positive post 7 basically horizontally, and the second adapter piece 6 can be extended to the negative post 8 basically horizontally, thereby effectively shortening the first adapter piece 5 and the second adapter piece 6, reducing heat emission, and lowering the temperature of the battery cell 20.

A first insulation piece 9 and a second insulation piece 10 are further disposed on the inner side of the housing 1. The first insulation piece 9 is configured to electrically isolate the positive post 7 from the housing 1, and the second insulation piece 10 is configured to electrically isolate the negative post 8 from the housing 1. The first insulation piece 9 and the second insulation piece 10 may be made of a plastic material. The positive post 7 may be connected to the housing 1, and the negative post 8 may be connected to the housing 1, by riveting. A sealing ring may be disposed at the junction. The sealing ring may be made of a fluororubber material.

As shown in FIG. 8, a preset clearance exists between the top of the first body portion 21 and the top inner surface of the housing 1. The clearance reserves a space for arranging a liquid cooling system, and keeps insulation between the first body portion 21 and the housing 1.

As shown in FIG. 9, a support plate 11 is disposed between the bottom of the second body portion 31 and the bottom inner surface of the housing 1. The disposed support plate 11 helps to keep the electrode assembly steady.

As shown in FIG. 10, the first positive tab 22 and the first negative tab 23 extend from the first body portion 21 separately and are bent to form a U-shaped structure with an opening. The second positive tab 32 and the second negative tab 33 extend from the second body portion 31 separately and are bent to form a U-shaped structure with an opening.

In the embodiments shown in FIG. 12, FIG. 13, FIG. 15, and FIG. 16, the battery cell includes a first end cap 1a and a second end cap 1b. A first opening is made on the first end face of the housing 1, and a second opening is made on the second end face of the housing 2. The first end cap 1a is configured to seal the first opening, and the second end cap 1b is configured to seal the second opening. The positive post 7 is mounted on the first end cap 1a, and the negative post 8 is mounted on the second end cap 1b. The positive post 7 includes a first inner post 71 and a first outer post 72. The first sleeve 7a is mounted on the first end cap 1a. The first outer post 72 is disposed on an outer side of the first end cap 1a and connected to the first sleeve 7a. The first adapter piece 5 is connected to a first end of the first inner post 71. A second end of the first inner post 71 passes through the first sleeve 7a and is connected to the first sleeve 7a on an outer side of the housing 1. The negative post 8 includes a second inner post 81 and a second outer post 82. The second outer post 82 is disposed on the outer side of the second end cap 1b. A first end of the second inner post 81 is located on the inner side of the second end cap 1b and connected to the second adapter piece 6. A second end of the second inner post 81 passes through the second end cap 1b and is connected to the second outer post 82.

In the embodiments shown in FIG. 14 and FIG. 17, the negative post 8 includes a second inner post 81 and a second outer post 82. The second sleeve 8a is mounted on the second end cap 1b. The second outer post 82 is disposed on an outer side of the second end cap 1b and connected to the second sleeve 8a. The second adapter piece 6 is connected to a second end of the second inner post 81. The second end of the second inner post 81 passes through the second sleeve 8a and is connected to the second sleeve 8a on an outer side of the housing 1.

As shown in FIG. 12 to FIG. 14, in this embodiment, both the first adapter piece 5 and the second adapter piece 6 are flat and straight in shape. One end of the first adapter piece 5 is connected to the first positive tab 22 and the second positive tab 32, and the other end is connected to the positive post 7. One end of the second adapter piece 6 is connected to the first negative tab 23 and the second negative tab 33, and the other end is connected to the negative post 8.

As shown in FIG. 15 to FIG. 17, in this embodiment, both the first adapter piece 5 and the second adapter piece 6 are L-shaped structures. The first connecting portion 51 of the first adapter piece 5 is connected to the first positive tab 22 and the second positive tab 32. The second connecting portion 52 is connected to the positive post 7. The stability of electrical connection between the second connecting portion 52 and the positive post 7 can be enhanced by increasing the contact area between the second connecting portion 52 and the positive post 7. The third connecting portion 61 of the second adapter piece 6 is connected to the first negative tab 23 and the second negative tab 33. The fourth connecting portion 62 is connected to the negative post 8. The stability of electrical connection between the fourth connecting portion 62 and the negative post 8 can be enhanced by increasing the contact area between the fourth connecting portion 62 and the negative post 8.

As shown in FIG. 16 to FIG. 18, a bracket 4 is disposed between the first body portion 21 and the second body portion 31. The bracket 4 is in a U-shaped structure. The bracket 4 includes a first support portion 41, a second support portion 42, and a third support portion 43 connected between the first support portion 41 and the second support portion 42. The first support portion 41 and the second support portion 42 are in a plate structure. The first support portion 41 is inserted into openings formed on the first positive tab 22 and the first negative tab 23 separately. The second support portion 42 is inserted into openings formed on the second positive tab 32 and the second negative tab 33 separately.

Although this application has been described with reference to exemplary embodiments, various improvements may be made to the embodiments without departing from the scope of this application, and the components in this application may be replaced with equivalents. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A battery cell, comprising:
a housing (1);
a first electrode assembly (2), disposed in the housing (1), wherein the first electrode assembly (2) comprises a first body portion (21), and a first positive tab (22) and a first negative tab (23) that extend from the first body portion (21); and
a second electrode assembly (3), disposed in the housing (1), wherein the second electrode assembly (3) comprises a second body portion (31), and a second positive tab (32) and a second negative tab (33) that extend from the second body portion (31), wherein
the first body portion (21) and the second body portion (31) are spaced out along a first direction, the first positive tab (22) and the first negative tab (23) are disposed at an end of the first body portion (21), wherein the end is closer to the second body portion (31) along the first direction; and the second positive tab (32) and the second negative tab (33) are disposed at an end of the second body portion (31), wherein the end is closer to the first body portion (21) along the first direction.

2. The battery cell according to claim 1, further comprising a first adapter piece (5), a second adapter piece (6), a positive post (7), and a negative post (8), wherein the first positive tab (22) and the second positive tab (32) are both connected to the first adapter piece (5), the first adapter piece (5) is connected to the positive post (7), the first negative tab (23) and the second negative tab (33) are both connected to the second adapter piece (6), and the second adapter piece (6) is connected to the negative post (8).

3. The battery cell according to claim 2, wherein the positive post (7) is mounted on a first end face of the housing (1), the negative post (8) is mounted on a second end face of the housing (1), the first end face is disposed opposite to the second end face, and both the first end face and the second end face are parallel to the first direction.

4. The battery cell according to claim 3, further comprising a first end cap (1a) and a second end cap (1b), wherein a first opening is made on the first end face of the housing (1), a second opening is made on the second end face of the housing (2), the first end cap (1a) is configured to seal the first opening, and the second end cap (1b) is configured to seal the second opening.

5. The battery cell according to claim 4, further comprising a first sleeve (7a), wherein the positive post (7) comprises a first inner post (71) and a first outer post (72), the first sleeve (7a) is mounted on the first end cap (1a), the first outer post (72) is disposed on an outer side of the first end cap (1a) and connected to the first sleeve (7a), the first adapter piece (5) is connected to a first end of the first inner post (71), and a second end of the first inner post (71) passes through the first sleeve (7a) and is connected to the first sleeve (7a) on an outer side of the housing (1).

6. The battery cell according to claim 4 or 5, further comprising a second sleeve (8a), wherein the negative post (8) comprises a second inner post (81) and a second outer post (82), the second sleeve (8a) is mounted on the second end cap (1b), the second outer post (82) is disposed on an outer side of the second end cap (1b) and connected to the second sleeve (8a), the second adapter piece (6) is connected to a second end of the second inner post (81), and the second end of the second inner post (81) passes through the second sleeve (8a) and is connected to the second sleeve (8a) on an outer side of the housing (1).

7. The battery cell according to any one of claims 2 to 6, wherein the first adapter piece (5) comprises a first connecting portion (51) extending in a direction perpendicular to the first direction, the first connecting portion (51) is connected to the first positive tab (22) and the second positive tab (32), an end that is of the first connecting portion (51) and that is closer to the positive post (7) is connected to the positive post (7); or, the first adapter piece (5) comprises a first connecting portion (51) extending in a direction perpendicular to the first direction and a second connecting portion (52) extending in a direction parallel to the first direction, the first connecting portion (51) and the second connecting portion (52) are connected to form an L shape, the first connecting portion (51) is connected to the first positive tab (22) and the second positive tab (32), and the second connecting portion (52) is connected to the positive post (7).

8. The battery cell according to any one of claims 2 to 7, wherein the second adapter piece (6) comprises a third connecting portion (61) extending in a direction perpendicular to the first direction, the third connecting portion (61) is connected to the first negative tab (23) and the second negative tab (33), an end that is of the third connecting portion (61) and that is closer to the negative post (8) is connected to the negative post (8); or, the second adapter piece (6) comprises a third connecting portion (61) extending in a direction perpendicular to the first direction and a fourth connecting portion (62) extending in a direction parallel to the first direction, the third connecting portion (61) and the fourth connecting portion (62) are connected to form an L shape, the third connecting portion (61) is connected to the first negative tab (23) and the second negative tab (33), and the fourth connecting portion (62) is connected to the negative post (8).

9. The battery cell according to any one of claims 2 to 8, further comprising a first insulation piece (9) disposed in the housing (1), wherein the first insulation piece (9) is configured to electrically isolate the positive post (7) from the housing (1); and/or, further comprising a second insulation piece (10) disposed in the housing (1), wherein the second insulation piece (10) is configured to electrically isolate the negative post (8) from the housing (1).

10. The battery cell according to any one of claims 1 to 9, further comprising a support plate (11), wherein the support plate (11) is disposed between the housing (1) and an end that is of the second body portion (31) and that is away from the first body portion (21).

11. The battery cell according to claim 10, wherein the support plate (11) is insulated from the housing (1), and an end that is of the first body portion (21) and that is away from the second body portion (31) is insulated from the housing (1).

12. The battery cell according to any one of claims 1 to 11, further comprising a bracket (4), wherein the bracket (4) serves as a support between the first electrode assembly (2) and the second electrode assembly (3).

13. The battery cell according to claim 12, wherein the bracket (4) comprises a first support portion (41), a second support portion (42), and a third support portion (43) connected between the first support portion (41) and the second support portion (42), the first support portion (41) is configured to serve as a support between the first body portion (21) and a first positive tab (22) and a support between the first body portion (21) and a first negative tab (23), and the second support portion (42) is configured to serve as a support between the second body portion (31) and a second positive tab (32) and a support between the second body portion (31) and a second negative tab (33).

14. The battery cell according to any one of claims 1 to 13, wherein the first body portion (21) is formed by winding together a first positive electrode plate, a first negative electrode plate, and a separator located between the first positive electrode plate and the first negative electrode plate, and the first direction is parallel to a winding centerline of the first body portion (21); and/or, the second body portion (31) is formed by winding together a second positive electrode plate, a second negative electrode plate, and a separator located between the second positive electrode plate and the second negative electrode plate, and the first direction is parallel to a winding centerline of the second body portion (31).

15. A battery, comprising the battery cell according to any one of claims 1 to 14.

16. An electrical device, comprising the battery according to claim 15, wherein the battery is configured to supply electrical energy to the electrical device.

17. A method for manufacturing a battery cell, comprising:
providing a housing (1), a first electrode assembly (2), and a second electrode assembly (3), wherein the first electrode assembly (2) comprises a first body portion (21), and a first positive tab (22) and a first negative tab (23) that extend from the first body portion (21), and the second electrode assembly (3) comprises a second body portion (31), and a second positive tab (32) and a second negative tab (33) that extend from the second body portion (31);
disposing both the first electrode assembly (2) and the second electrode assembly (3) in the housing (1); and
spacing out the first body portion (21) and the second body portion (31) along a first direction, and disposing the first positive tab (22) and the first negative tab (23) at an end of the first body portion (21), wherein the end is closer to the second body portion (31) along the first direction; and disposing the second positive tab (32) and the second negative tab (33) at an end of the second body portion (31), wherein the end is closer to the first body portion (21) along the first direction.

18. An apparatus for manufacturing a battery cell, comprising:
a providing apparatus, configured to provide a housing (1), a first electrode assembly (2), and a second electrode assembly (3), wherein the first electrode assembly (2) comprises a first body portion (21), and a first positive tab (22) and a first negative tab (23) that extend from the first body portion (21), and the second electrode assembly (3) comprises a second body portion (31), and a second positive tab (32) and a second negative tab (33) that extend from the second body portion (31); and
a placement apparatus, configured to dispose both the first electrode assembly (2) and the second electrode assembly (3) in the housing (1), space out the first body portion (21) and the second body portion (31) along a first direction, and dispose the first positive tab (22) and the first negative tab (23) at an end of the first body portion (21), wherein the end is closer to the second body portion (31) along the first direction; and dispose the second positive tab (32) and the second negative tab (33) at an end of the second body portion (31), wherein the end is closer to the first body portion (21) along the first direction.
